(19) Europäisches Patentamt
European Patent Office
Office européen des brevets

(11) **EP 0 647 365 B1**

(12) **EUROPEAN PATENT SPECIFICATION**

(45) Date of publication and mention
of the grant of the patent:
**07.10.1998 Bulletin 1998/41**

(51) Int Cl.6: **H02J 3/14**, G05F 1/66,
H05B 3/78, F24D 17/00,
F24H 1/20

(21) Application number: **93915601.4**

(22) Date of filing: **12.07.1993**

(86) International application number:
**PCT/CA93/00288**

(87) International publication number:
**WO 94/06191 (17.03.1994 Gazette 1994/07)**

(54) **POWER CONTROLLER DEVICE**

LEISTUNGSSTEUERGERÄT

DISPOSITIF DE COMMANDE DE PUISSANCE

(84) Designated Contracting States:
**AT BE CH DE DK ES FR GB GR IE IT LI LU MC NL PT SE**

(30) Priority: **01.09.1992 GB 9218473**
**01.12.1992 CA 2084229**

(43) Date of publication of application:
**12.04.1995 Bulletin 1995/15**

(73) Proprietors:
• **DOSANI, Nazir**
**Thornhill, Ontario L3T 5A7 (CA)**
• **LADHA, Nizar**
**Newmarket, Ontario L3Y 4B6 (CA)**

(72) Inventors:
• **DOSANI, Nazir**
**Thornhill, Ontario L3T 5A7 (CA)**
• **LADHA, Nizar**
**Newmarket, Ontario L3Y 4B6 (CA)**

(74) Representative: **Bolte, Erich, Dipl.-Ing. et al**
**Meissner, Bolte & Partner**
**Patentanwälte**
**Hollerallee 73**
**28209 Bremen (DE)**

(56) References cited:
AT-B- 323 951           DE-A- 2 019 020
DE-C- 3 212 765         US-A- 4 978 833
US-A- 5 115 491

## Description

Field of the Invention:

The invention relates to a power controller device comprising:

a power input circuit for receiving input power from an electrical power source;
a power output circuit for supplying output power to a load;
a voltage detector for sensing the voltage of said electrical power source; and
a controller responsive to said voltage detector.

The invention relates in particular to a power controller device for controlling electrical power consumed by resistive load devices, such as electric water heaters, electric baseboard heaters, brick heaters and the like.

Background of the Invention

Large electrical utilities use several different kinds of generating means to generate electrical power. These include hydro electric and nuclear, as well as coal and oil fired generators. Generally, hydro electric and nuclear power generators provide the base energy required and coal and oil fired generators are operated only during "on-peak" load periods when larger amounts of electricity are required to meet additional demand. The additional energy generated during the on-peak periods by oil and coal fired generators tends to be more expensive for the utility companies to generate. Therefore, the utility companies greatly benefit to the extent that power consumption can be shifted from "on-peak" periods to "off-peak" periods when demand for electrical power is lower.

In addition, hydro electric and nuclear generators must operate continuously and cannot be turned off even when the power generated by these generators is not needed. This condition, when the general power consumption drops below the power which is capable of being produced by the continuous generating means, is generally called "free wheeling". Any energy not used during these periods is wasted. In addition, it is not always possible to predict when "free wheeling" conditions will exist.

Power controller devices have previously been developed in attempts to shift the power demands from on-peak periods to off-peak periods. Such prior art power controller devices have essentially comprised timers which turned electrical resistive load devices on and off, so that the load devices were off during on-peak periods when electrical power demands are high and on during off-peak periods when power demands are lower.

There are a number of difficulties inherent in such prior art devices. First, by only being able to turn the load devices on and off, the prior art power control devices did not adequately control the resistive load devices. Secondly, because the timers were preset, and because the prior art power controller devices could not independently sense free wheeling conditions, the prior art devices could not take advantage of extra power available when electrical demand unexpectedly dropped.

Furthermore, because the prior art devices could only turn load devices on or off, and because many of these devices were synchronized with expected off-peak periods any thus would turn their respective loads on simultaneously, sudden large demands for power resulted when all of the resistive load devices equipped with the prior art timer devices were turned on simultaneously. A similar problem, know as "fly-back", occurs generally when power resumes after brownouts and blackouts.

Brownout, generally defined as a condition where the supply voltage drops 10% or more, is itself a problem due to the increase in current which accompanies a voltage drop. In extreme conditions the current increase, particularly if it is sudden, can damage hydro electric distribution stations and power-sensitive devices such as air conditioner compressors.

A power controller device of the art mentioned at the beginning is disclosed in DE-C 32 12 765. Described is an apparatus for controlling the voltage supplied to a load so that the power supplied to the load remains constant regardless of fluctuations of the input power supply.

For overcoming the above mentioned disadvantages the power controller device according to the present invention is characterized in that said controller changes the output power supplied to said load by said power output circuit in response to sensed changes in voltage of said electrical power source beyond a present amount and in that said controller increases the output power supplied to said load by said power output circuit when the voltage of said electrical power source rises above a first threshold value.

The power controller device according to the invention provides greater virtuosity and higher efficiency in the control and utilization of resistive electrical devices.

The present invention in a preferred embodiment includes voltage sensing means for detecting a voltage drop in the power supply and comparator means for deactivating the load when the voltage drop exceeds a preselected value, such as 10% of nominal voltage. This avoids damage to hydroelectric equipment and household appliances due to current overload during such conditions. The present invention further provides a "soft-start" function which increases power to the load in controlled increments, and the controller of the present invention thus offers "fly-back" protection after blackout and brownout conditions.

The present invention further provides a power controller which can detect and take advantage of "free wheeling" conditions, delivering power to the load so as to make use of excess electrical power which would otherwise be wasted during these time periods.

In an embodiment of the invention for controlling the power delivered to a water heater, the present invention further provides means for maintaining consistency in the temperature of hot water delivered by the water heater through means for bypassing a heat exchanger, in which heat is exchanged between the cold water supply and the hot water output of the water heater, or through a mixing valve, by detecting when thermal dropoff occurs in the hot water output and closing off the flow of cold water to compensate.

Brief Description of the Drawings

In drawings which illustrate by way of example only a preferred embodiment of the present invention,

Figure 1 is a block diagram of one embodiment of the present invention;

Figure 2 is a diagrammatic view of an embodiment of the power controller of the present invention controlling a water heater;

Figure 3 is a schematic diagram of the power supply, voltage detection and reset circuitry for the power controller of Figure 1;

Figure 4 is a schematic diagram of the load switching circuitry for the power controller of Figure 1;

Figure 5 is a schematic diagram of the temperature sensor and stepper motor driver circuitry for the power controller of Figure 1;

Figure 6 is a schematic diagram of the microprocessor for the power controller of Figure 1;

Figure 7 is a graphic representation showing temperature as a function of water output in the water heater of Figure 1; and

Figure 8 is a schematic view of a utility controlled system controlling power controller devices within a power grid.

Detailed Description of the Invention

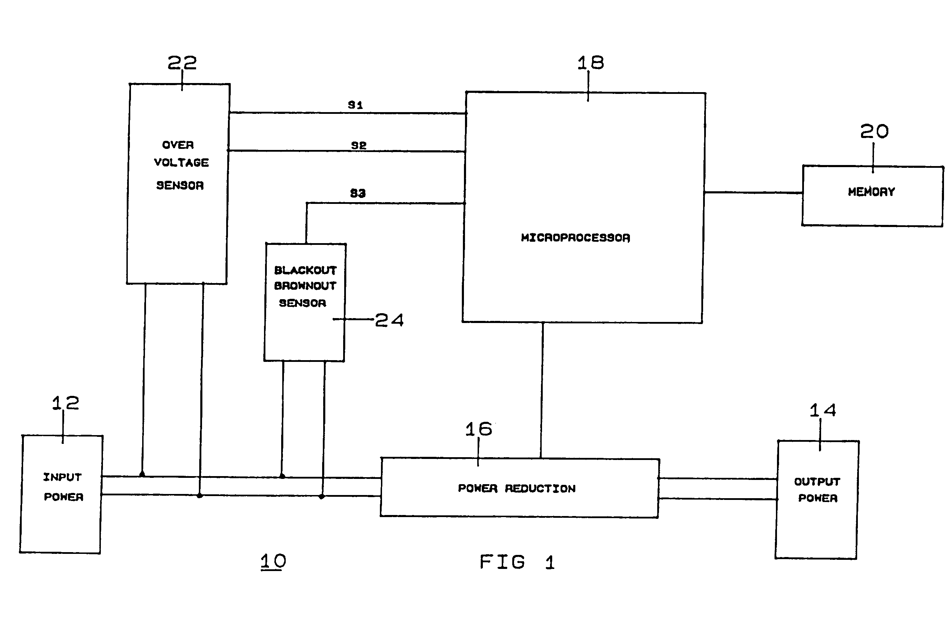

As shown in Figure 1, in one embodiment the present invention comprises a power controller device, shown generally as 10, for controlling the power consumed by a resistive load device, in the embodiment shown a water heater 2 such as that described in U.S. Patent No. 5,115,491. The power controller device 10 comprises an input power means 12, an output power means 14, a power reduction means 16 and a control means 18.

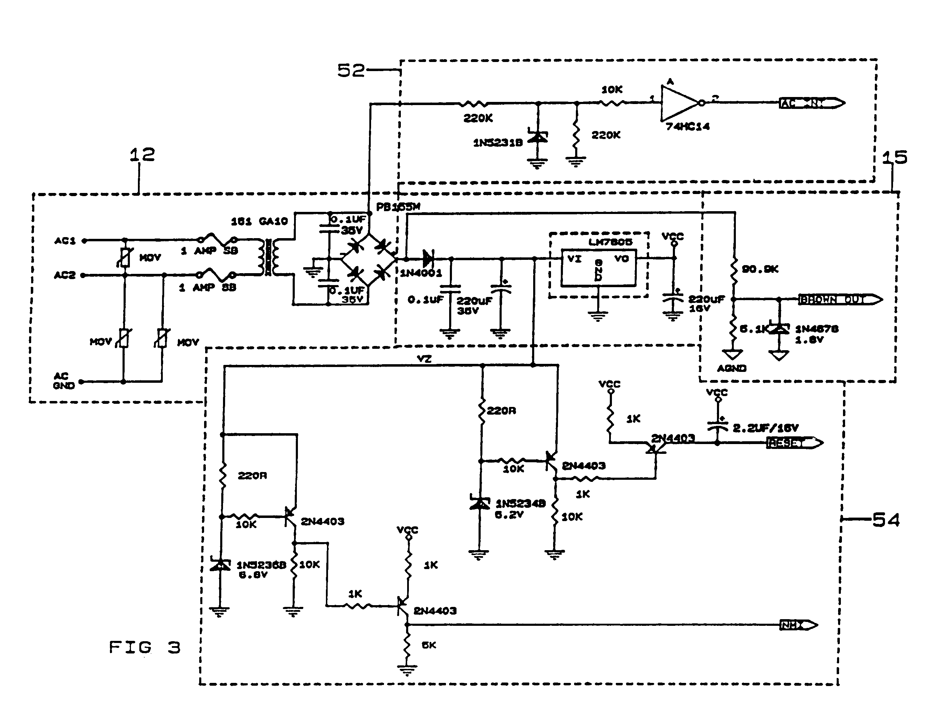

The input power means 12, illustrated schematically in Figure 3, is capable of receiving input power from an alternating current power source (not shown). This could be any alternating current power source, including a standard wall plug as found in any residential building and which derives power from the local electrical utility.

The output power means 14 is capable of providing output power from the device 10 to a resistive load device such as a water heater, baseboard heater, brick heater or the like. It will be appreciated that the resistive load device could be any electrical device which exhibits power consumption characteristics similar to that of a resistor. The controller can also be used in similar fashion to control a reactive load, such as an air conditioner compressor.

As shown in Figure 1, the device further comprises power reduction means 16 electrically associated with both the power input means 12 and the power output means 14. The power reduction means 16 is operable to reduce the output power going to the load device by discreet intervals.

Figure 3 illustrates the power input means comprising a power supply circuit including a bridge rectifier 50. The microprocessor 18 is stimulated to energize the power output means 14 by a zero crossing firing circuit 52, also shown in Figure 3, which serves two functions. First, firing the TRIACs at the zero crossing point of the input signal eliminates the effects of radio interference and surge currents, and eliminates frequency dependence because the firing circuit resets with each cycle of the input signal. Second, electrical utilities in many parts of North America are required to ensure that at a specific time of day (e.g. 7:00 a.m.) the average cycles per second over the previous 24 hours is exactly 60. The zero crossing detector 52 can therefore be associated with a counter (not shown) which counts the number of zero crossings and resets the microprocessor clock circuitry 18a every 24 hours. This ensures that the controller 18, which cannot feasibly have a perfect clock but must be able to operate for years without servicing, exhibits only negligible deviation from true time because any deviation is automatically corrected on a daily basis.

Figure 3 also illustrates the voltage detection circuit 22, which detects changes in the supply voltage and signals the microprocessor 18 when the voltage drops below a preset level, preferably 10% of the nominal supply voltage, to interrupt the output power during brownout conditions; and signals the microprocessor to increase the output power level when the voltage rises above a preset limit, in the case of a 240V supply for example 257V (an increase of 7% over nominal voltage), which would indicate free wheeling conditions. Figure 3 further illustrates a reset circuit 54 which signals the microprocessor 18 when the supply voltage returns to within the selected limit.

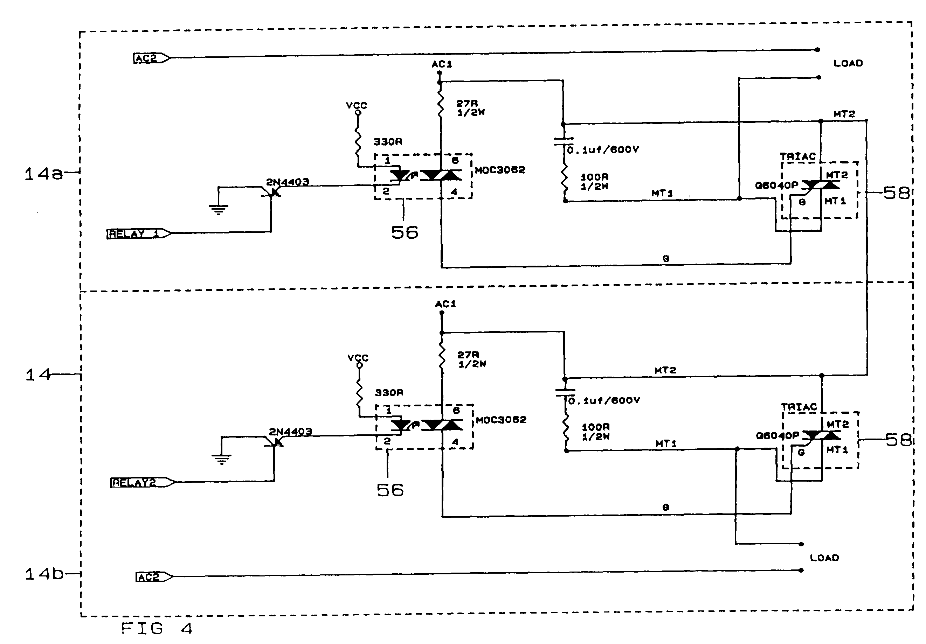

Figure 4 illustrates the output power means 14 for the controller illustrated in Figure 1, comprising switching circuits 14a, 14b for each of the upper and lower resistance heating elements 3, 4 in the water heater 2. A low current (100 mA) opto-isolator 56 signalled by the microprocessor 18 switches a heavy duty TRIAC 58 which controls the output power to the load 2.

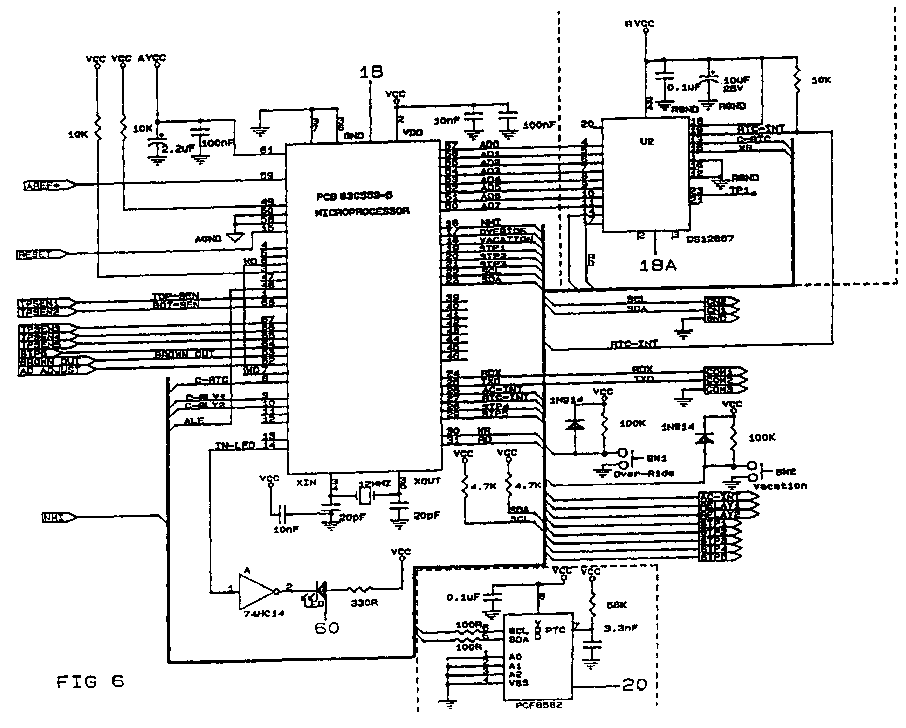

Figure 6 illustrates the microprocessor 18 and its associated clock circuitry 18a and E$^2$PROM memory 20. As noted above, the clock 18a is associated with the zero-crossing detector 52 to maintain accurate count of time by resetting every 24 hours when the exact number of cycles for that 24 hour period have been counted. The vacation and override switches SW1, SW2 enable the user to deviate from the preset power output configuration for any given time period to account for absence from the household, unusually large hot water requirements and the like. Preferably the override function is limited to a single interval of specified length during any 24 hour period, to prevent constant circumvention of the controller. An LED indicator 60 may be provided to indicate that override is in effect.

During normal operation, the AC power used by an electrical resistive load device is governed by the following equation:

$$(1) \qquad P = Irms \times Vrms$$

Furthermore, from Ohm's law, the current and voltage are dependent on the resistance of the resistive load device such that:

$$(2) \qquad V = I \times R$$

and therefore

$$(3) \qquad P = (Vrms)^2 / R \text{ or } P = (Irms)^2 \times R$$

Therefore, during normal operation, for a constant resistance and a constant voltage, the power consumed will also stay constant. The power consumed during normal conditions as shown in equation (3) will be referred to as the maximum output level to the resistive load device.

Most local utility companies can usually predict when the on-peak and off-peak periods will occur. Therefore, the desired power output levels for predetermined time intervals can be recorded in the memory means 20. In this way, the desired output level could be set close to or at the maximum output level during traditionally off-peak periods, such as late night and early morning, and at lower levels, or off, during traditionally on-peak periods such as daytime.

The power controller device 10 comprises memory means 20 upon which or in which the desired output power levels or temperature settings for a plurality of predetermined time intervals can be recorded. The duration of the intervals can vary, such as from 10 seconds to several hours, and different intervals can be selected for different times of the day, weekends, holidays etc. In this way, the device 10 can be programmed to output different power levels to the load device during specified periods of time so that power can be conserved during on-peak periods and the resistive load device can operate for longer intervals, and at higher power levels, during off-peak periods.

For instance, the memory means 20 can have recorded thereon relatively higher desired power output levels for daytime periods during Sundays and holidays than for normal weekdays, since most industries are closed on Sundays and holidays and power consumption is traditionally lower than during daytime periods during weekdays when energy consumption is higher. In one embodiment, the memory means 20 may be programmed for up to 5 years in advance to provide for all anticipated on-peak and off-peak conditions during that period. Therefore, device 10 can balance the needs of the consumer (delivery of power demanded) and the needs of the utility (conservation of power at on-peak periods) by varying the power output level to the load device depending on traditional power demands.

The following are recorded in the memory means 20:

1. The date and duration of each time interval for the various settings of power and temperature levels, including week days, weekends, public holidays and desired vacation days, including four days per year selected by the user for deviation from normal activity;

2. The upper voltage limit at which free wheeling conditions are deemed to be in effect;

3. The time intervals during which free wheeling conditions are deemed to be in effect;

4. The lower voltage limit at which brownout conditions are deemed to be in effect;

5. The output power levels for each time interval, for each load controlled by the device (for example for each of upper and lower heating elements in a water heater 2);

6. Temperature levels for each time interval, for each load being controlled;

7. The by-pass valve 74 (or mixing valve) opening for each time interval;

8. The steps or increments of power level increase/reduction;

9. An address for remote addressing;

10. In the case of a water heater, the desired temperature of hot water output to the user, responsive to temperature sensor T2; and

11. The time delay following which power will resume after a brownout/blackout.

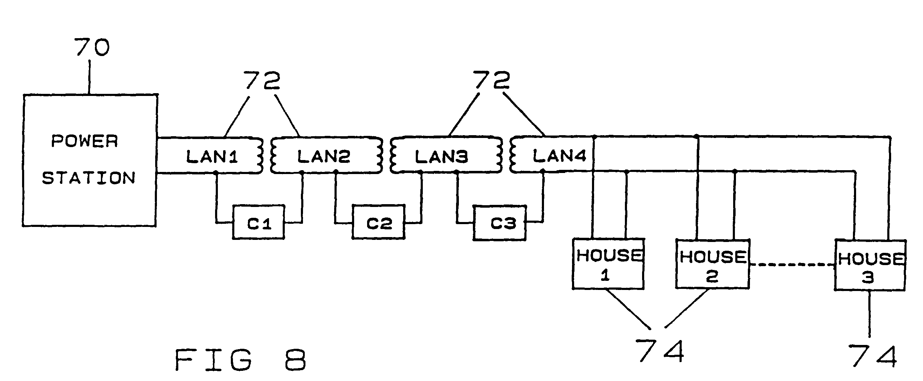

The power controller device may be remotely programmable, for example through a main frame computer operated by the electrical utility communicating with a number of local area networks 72. The utility could thus remotely disable, enable or adjust power to appliances controlled by the power controller device 10. The utility can communicate with the power control devices 10 via spread spectrum utilizing power supply lines at the end user location, as illustrated schematically in Figure 8. Essentially, a main frame computer 70 controlled by the utility will be in communication with each LAN 72 through a modem, and each LAN 72 would in turn communicate with power controller devices 10 in the various households 74 via spread spectrum across the two-phase AC power mains. In this fashion, the utility would effectively control power usage in the most power consumptive home appliances over an entire grid or neighbourhood of electrical users. Spread spectrum is preferred, but other communication protocols may be used if desired. Power controller devices 10 could be addressed individually or in groups, giving the utility extremely versatile control over power consumption in any particular locale.

Alternatively, the memory means 20 could store, in addition to the previously listed data, information concerning power usage, the numbers of brownout and free wheeling cycles, temperature settings and on/off times over any specified interval. This information can be used to apply "fuzzy logic" to the limits recorded in the memory means 20, and these limits can then be changed automatically by the power controller device 10 in accordance with an average value taken over a preset period of time. In this situation, it would be the actual power usage requirements of the user which would determine the recorded data for upper and lower voltage limits, output power levels and temperature levels, etc.; essentially the power controller device would "adapt", over time, to the particular power usage requirements of a specific subscriber. At the same time, certain values stored in the memory means 20, which would be programmed either at the factory or at a depot prior to delivery of the device 10 to the user or power company, could be set to remain unaffected by power consumption at the user premises, or to stay within limits preset by the power company.

The power reduction means 16 reduces the power to any resistive load device from the maximum output level to lower output levels through conventional means such as "cycle stealing", which entails periodically eliminating half cycles or full cycles from the alternating current being supplied to the resistive load device. In this way, both the power consumed by the load and the power supplied by the alternating current source are reduced, thereby resulting in a net reduction and savings in power consumption.

Control means 18 controls the power reduction means 16. In a preferred embodiment, the control means 18 comprises a microprocessor running in real time. In this way, the control means 18 selectively directs the power reduction means 16 to deliver power at different power output levels for different time intervals programmed into the device 10.

The power reduction means 16 reduces the output power level delivered to a resistive load device 2 by discreet intervals. For instance, in a preferred embodiment the intervals are equal to 10% of the maximum output level. Therefore, in this embodiment, the power output level will be preset at 10%, 20%,...80%, 90% or 100% of the maximum output level for any given interval. As an example, power output might be set at 100% for the interval 2:00 a.m. to 5:00 a.m., and at 10% for the interval 8:00 a.m. to 5:00 p.m., depending upon anticipated demand. Other discreet intervals, such as 5% or 1% of the maximum output level, could also be used.

Most power utilities generate electrical power using means which operate continuously. Such energy generating means include hydro electric power and nuclear power. During some off-peak periods, the power generated by many of these continuous generation means exceeds that which is generally required. During these periods, turbines located in hydro electric facilities are allowed to turn without generating any power. As a result, power is wasted during these periods.

As stated above, conditions such as these, when the general energy consumption drops below the power which is capable of being produced by the continuous generating means, are generally called "free wheeling" conditions. When this occurs, it is common for the voltage supplied by the utility to increase marginally. For example, in countries such as Canada and the United States where the voltage supplied by the utility is approximately 120/240 volts, the line voltage could increase significantly in free wheeling conditions.

In a preferred embodiment of the present invention, the device 10 comprises an over-voltage sensor means 22 coupled to the supply voltage detection circuit 15, which continuously monitors the voltage of the power entering the input power means 12. This voltage corresponds to the voltage of the power source. The over-voltage sensor means 22 sends a first signal S1 to the controller means 18 when the voltage sensed by the detection circuit 15 exceeds a preset upper voltage. In the case of countries where the voltage is 120/240 volts, this preset upper voltage may be up to 132/264 volts.

When the signal S1 is received by the control means 18, the control means 18 can override the predetermined output level which has been recorded in the memory means 20 for that period of time and signal the power reduction means 16 to increase the output power to a level above the preset output level. In this situation the output level would generally be increased to equal the maximum output power level and the temperature of the elements 3,4 would similarly be set to the maximum. In this way, the device 10 permits the resistive load device to use and store power (as heat) which would be normally lost during free wheeling conditions.

In the case of reactive devices such as air conditioners, the power controller device 10 could activate the air conditioner during free wheeling conditions and supercool the room or environment, thus reducing the amount of power required to run the air conditioner when demand is high, because the temperature of the supercooled environment can be allowed to rise over time while still being within tolerable levels. Since the temperature to which the room may be cooled can be selected by the power controller device 10, rather than preset at a specific level, the utility can take advantage of free wheeling conditions in this manner. Similarly the "cold" could be stored as ice or otherwise, to absorb heat when the demand for power is high. It should be noted that the device 10 could also be programmed to disregard the over-voltage sensor signal SI during some periods of the day or night.

Once the over-voltage sensor 22 senses that the voltage of the power inputted from the input power means 12 has fallen below the upper voltage limit, the over-voltage sensor 22 sends a second signal S2 to the control means 18 so that the control means 18 may resume the predetermined power output level and temperature which was recorded in the memory means 20 for that time interval.

In the preferred embodiment, the device 10 further comprises a brownout and blackout sensor means 24 which is also responsive to the supply voltage. The brownout and blackout sensor means 24 could be combined as one sensor means, as shown in Figure 1, or could be two separate sensors. The brownout and blackout sensor means 24 includes the supply voltage detection circuit 15, which as noted above continuously senses the power being delivered to the input power means 12 from the alternating power source. The brownout and blackout sensor means 24 detects the commencement of a brownout or blackout as a voltage drop to the preset minimum, which may be 10% of nominal supply voltage, and turns the load off until the voltage detection circuit 15 senses that the brownout or blackout has ended. This assists utilities by decreasing the general power demand during brownouts.

When the voltage detection circuit 15 senses a resumption of supply power above the preset minimum after a brownout or blackout, the brownout and blackout sensor means 24 sends a signal S3 to the control means 18. In response to the signal S3, the control means 18 will deliver power to a resistive load in gradually increasing increments (of 10% in the preferred embodiment) rather than immediately increasing the output power to the preset output level, a so-called "soft-start". This helps to prevent "fly-back", which is a condition that occurs after a blackout or brownout when the power supply resumes and electrical devices switched on at the time of the blackout or brownout all begin to draw power simultaneously, creating a power surge which overloads the system and can cause another brownout or blackout.

Preferably the control means 18 further selects a short random time delay, for example between 1 to 30 minutes, following which it resumes delivering power to the load after a brownout or blackout. Alternatively, control means 18 in power controller devices 10 controlling loads in different households in the same area can be programmed to resume delivering power to their respective loads after different preset delay intervals; for example, after a brownout or blackout the power controller 10 in each successive household may be programmed to resume power output one minute after that of the previous household, until a 30 minute delay interval is reached (in the 30th household) at which point a 1 minute delay interval is preset for the next (31st) household, and so on. In this fashion, not all of the devices 10 will resume delivering power to their respective load devices at the same time, which also helps to avoid fly-back.

The over-voltage sensor means 22 and the brownout and blackout sensor means 24 can also be used to control inductive loads, such as electric motors. For example, if the voltage detection circuit 15 senses the voltage exceeding an upper limit, the over-voltage means 22 could send a signal causing a control means to turn the induction device off. Likewise, if the voltage detection circuit 15 senses that power has decreased significantly, the brownout or blackout sensor 24 could send another signal causing the control means to turn off the device. In this way, the inductive load would never operate during conditions of excess or deficient voltage, and damage to the inductive load could be avoided.

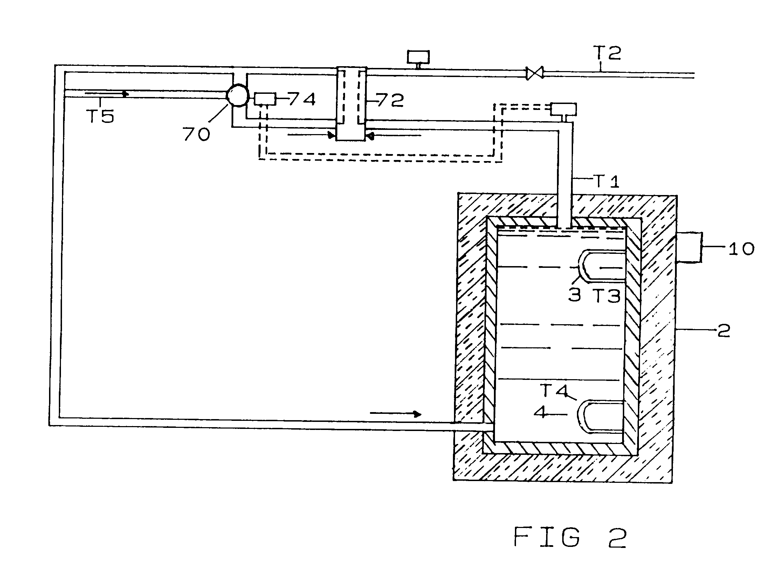

In a further preferred embodiment, the device 10 is connected to an electric hot water heater 36, as shown in Figure 2. The water heater shown is that described in U.S. Patent No. 5,115,491, and utilizes a heat exchanger through which the cold water supply to the tank is heated by the hot water output from the tank. In this embodiment, the device 10 further comprises a temperature sensor means 30 connected to temperature sensors T1, T2, T3, T4 and T5, placement of which is illustrated in Figure 2. Temperature sensor T1 measures the temperature of the water leaving the hot water tank 40. Temperature sensor T5 measures the temperature of the cold water entering the hot water tank 40. The temperature of the cold water entering the heat exchanger 72 will vary seasonally as the temperature of the ground and/or ground water changes.

Accordingly, in this embodiment of the invention, to further conserve energy, the device 10 will not heat the water in the tank 40 to a fixed temperature. Rather, the water in the tank 40 will be heated to a temperature which is greater by a predetermined amount than the temperature of the water entering the hot water tank 40. For example, the difference between the target temperature for the water leaving the hot water tank 40 and the cold water supply entering the hot water tank 40 could be programmed to be 50 degrees Celsius. The temperature of the water leaving the hot water tank 40 will thus be slightly colder during the winter months than in the summer months because the cold water supply entering the hot water tank 40 is also colder during the winter months. The net result is that no further energy will be required during the winter season than during the summer season to heat water in the hot water tank 40.

The desired temperature difference between the water in the hot water tank 40 and the cold water supply entering the hot water tank 40 can be predetermined at the time of installation of the device 10. To accommodate slight variations in ground water temperatures due to daily changes, the temperature of the water in the hot water tank 40 may be determined as a function of an average of the temperatures of the water entering the hot water tank 40 over previous days or weeks as measured by sensor 34.

In most hot water tanks, there are two heating elements; an upper heating element 3 and lower heating element 4. In a preferred embodiment, the lower element 4 is not turned on during on-peak hours and the device 10 sends power only to the upper element 3. The upper element 3 and the lower element 4 will both operate only at times when maximum power is being sent to the water heater 2, or when free wheeling conditions are sensed by the over-voltage sensor means 22. In these circumstances, the temperature of the water in the hot water tank 2 may be allowed to rise above the target temperature determined by the temperature of the water entering the hot water tank 2. In this way, excess energy created during free wheeling conditions may be stored in the form of heat energy by overheating the water in the hot water tank 2. The device 10 will of course be programmed not to overheat the water beyond an upper maximum, such as 90 degrees Celsius, to avoid scalding and damage to the tank 2.

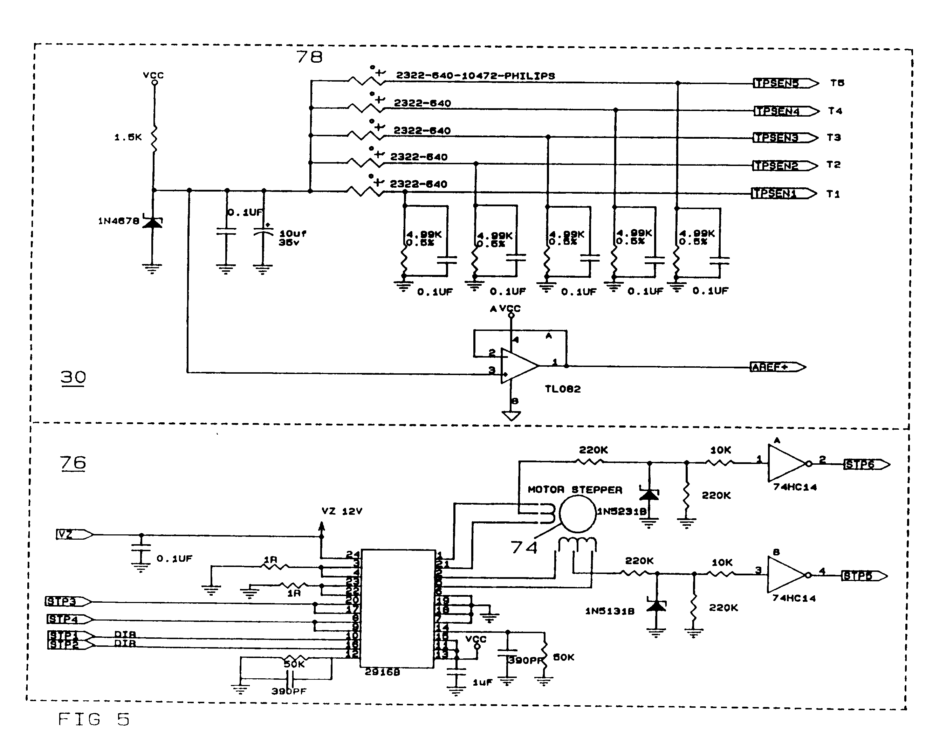

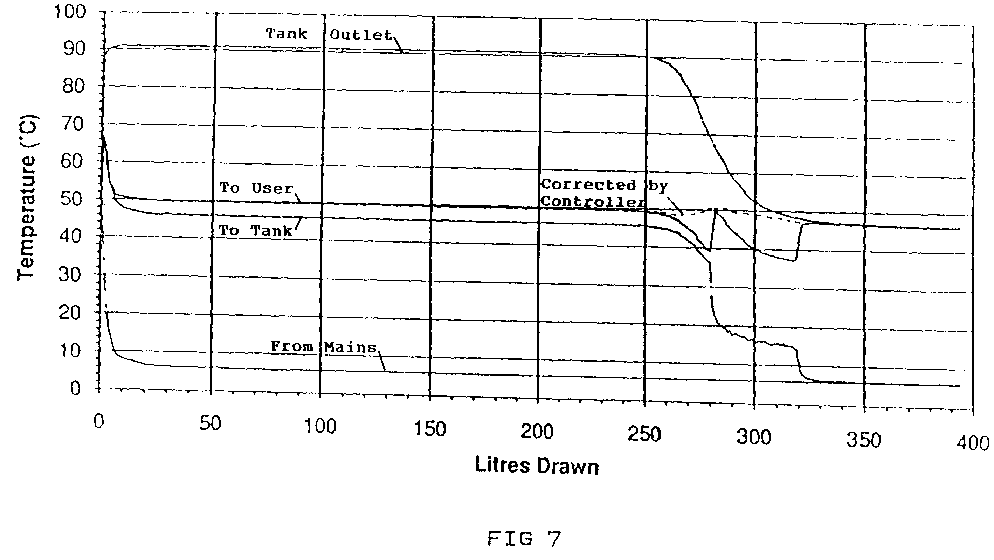

As can be seen in Figure 7, a phenomenon associated with water heaters of this type is the invariable temperature drop which occurs in the hot water output commencing after usage of about 250 litres of water from the tank 2, which is referred to herein as "thermal dropoff". Thus, in the embodiment of the invention used to control the power consumption of the electric water heater of Figure 2, a bypass valve 70 is provided to route the cold water supply around the heat exchanger 72 in response to the temperature sensor means T5 detecting thermal dropoff in the hot water output, thus eliminating cooling of the hot water output and retaining a consistent output temperature. In order to achieve a consistent output temperature with minimal variation, the bypass valve 70 is actuated by a stepper motor 74 which controls the flow of cold water through the valve 70, ie. diverts the cold water supply from the heat exchanger 72, in precise amounts. The stepper motor 74 is controlled by the stepper motor circuit 76 illustrated in Figure 5. In a water heater that does not use a heat exchanger 72, the stepper motor could be used to control a mixing valve (not shown) which would thus adjust a flow of cold water mixing with the hot water output to regulate the temperature of the output. It will be recognized that this aspect of the invention can be used to control fluid flow of other types as well, for example in gas furnaces, oil burners etc., where the desired flow rate is dependant on the temperature of either the device or its environment.

Figure 5 also illustrates the temperature sensor means for the controller 10 illustrated in Figure 2. Each sensor comprises a thermistor 78 with an associated voltage detector. The microprocessor 18 is programmed with known voltage values corresponding to temperatures within the range of the thermistors 78. Changes in temperature are thus detected, and if the temperature of heated water drops the soft-start process is activated for one or both heating elements 3,4 (in response to signals from T1, T3 and T4) in accordance with the preset output requirements for that time period, or the stepper motor driver circuit 76, also illustrated in Figure 5, is activated (in response to signals from T1, T2 and T5) to effect any necessary change in the bypass valve 70 to divert cold water from the heat exchanger 72 and compensate for thermal dropoff. An additional safety function is provided by feedback signals from both temperature sensor and motor driver circuits 30, 76 to the microprocessor 18, which is thus alerted to any tampering (e.g. the motor or a sensor is shorted out or removed) and can shut down the load 2 in response.

In a preferred embodiment, the microprocessor 18 is capable of controlling not only the power output to the heating elements 3, 4, but also the temperature of each heating element. The power control device 10 may thus be programmed to supply a certain level of power to each heating element, or to maintain each heating element at a specified temperature, or both, until hot water in the water heater reaches a specified maximum temperature. In fact, the temperature to which each element will rise is independent of the power level output to the heating element, but the time taken by the element to reach the preset temperature is directly related to the output power level. It is believed that ultimately the most energy-efficient control will involve balancing the power output level and the maximum temperature of the element to achieve optimum power usage.

It will be understood that, although various features of the invention have been described with respect to one or another of the embodiments of the invention, the features and embodiments of the invention may be combined or used in conjunction with other features and embodiments of the invention as described and illustrated herein. Although this disclosure has described and illustrated certain preferred embodiments of the invention, it is to be understood that the invention is not restricted to these particular embodiments.

## Claims

1. A power controller device (10) comprising:

    a power input circuit (12) for receiving input power from an electrical power source;
    a power output circuit (14) for supplying output power to a load;
    a voltage detector (22, 24) for sensing the voltage of said electrical power source; and
    a controller (18) responsive to said voltage detector characterized in that said controller (18) changes the output power supplied to said load by said power output circuit in response to sensed changes in voltage of said electrical power source beyond a preset amount and in that said controller (18) increases the output power supplied to said load by said power output circuit (14) when the voltage of said electrical power source rises above a first threshold value.

2. A power controller as defined in claim 1 wherein said controller (18) disconnects said power output circuit (14) from said load when the voltage of said power source drops below a second threshold value indicative of a brownout or blackout condition.

3. A power controller device as defined in claim 2 wherein said controller (18) automatically reconnects said power output circuit (14) to said load when the voltage of said electrical power source returns above said second threshold value, said controller (18) conditioning said power output circuit (14) to supply output power to said load in gradually increasing increments when reconnected said load.

4. A power controller device as defined in claim 3 wherein said controller (18) further includes delay means to delay reconnection of the power output circuit (14) to said load when the voltage of said electrical power source returns above said second threshold value.

5. A power controller device as defined in claim 4 wherein said delay means includes a timer, said timer being set to a predetermined time-out value, said power output circuit (14) being reconnected to said load when said time-out value expires.

6. A power controller device as defined in claim 5 wherein said controller further includes a random number generator to generate said time-out value.

7. A power controller device as defined in any one of the preceding claims further including a real time clock and a counter for counting the number of cycles of an AC power source input to said power controller device (10) such that after a preset number of AC cycles said controller (18) forceably resets said real time clock to a preset time.

8. A power controller device as defined in any one of the preceding claims wherein said output power is changed in discrete steps.

9. A power controller device as defined in any one of the preceding claims further comprising memory (20) for storing a desired output power level or temperature level or both for each of a plurality of periods of time.

10. A power controller device as defined in claim 9 wherein said controller (18) is actuated by the temperature level of the load or the temperature level of its environment.

11. A power controller device as defined in claim 9 further including override means for overriding the desired power output level and/or temperature level for any given predetermined time period.

12. A power controller device as defined in claim 9 wherein the power controller device (10) is remotely programmable.

13. A power controller device as defined in claim 12 wherein said memory (20) is programmable by a remote controller communicating across power supply lines supplying input power to the power input circuit (12).

14. A power controller device as defined in claim 9 wherein said memory (20) also records power level output data, an average of such data over a preset period of time being used to change variable stored limits in the memory.

15. A power controller device as defined in claim 9 wherein said memory (20) also records the temperature of the environment, an average of such data over a preset period of time being used to change variable stored limits in the memory.

16. A power controller device as defined in claim 9 wherein said memory (20) records a desired output power level or temperature level or both over a period of days, weeks, months or years.

17. A power controller device as defined in any one of the preceding claims including a plurality of power output circuits (14) for delivering output power to multiple loads.

18. A power controller device as defined in any one of the preceding claims further including a motor coupled to a by-pass valve for diverting a cold water supply around a heat exchanger in response to temperature sensors monitoring a cold water supply and a hot water output.

19. A power controller device as defined in any one of the preceding claims further including a motor coupled to a mixing valve for mixing a cold water supply with a hot water output to regulate the temperature of hot water delivered to a user.

20. A power controller device as defined in any one of the preceding claims further including a motor coupled to a valve for controlling a flow of fluid through a conduit.

**Patentansprüche**

1. Leistungssteuerungsvorrichtung (10) mit folgendem:

   einer Leistungseingangsschaltung (12) zum Empfangen von Eingangsleistung aus einer Stromquelle;
   einer Leistungsausgangsschaltung (14) zum Abgeben von Ausgangsleistung an eine Last;
   einem Spannungsdetektor (22, 24) zur Messung der Spannung der besagten Stromquelle; und
   einer Steuerung (18), die auf den besagten Spannungsdetektor reagiert, dadurch gekennzeichnet, daß die besagte Steuerung (18) als Reaktion auf gemessene Änderungen der Spannung der besagten Stromquelle über einen im voraus eingestellten Betrag hinaus die durch die besagte Leistungsausgangsschaltung (14) an die besagte Last abgegebene Ausgangsleistung ändert, und dadurch, daß die besagte Steuerung (18) die durch die besagte Leistungsausgangsschaltung (14) an die besagte Last abgegebene Ausgangsleistung vergrößert, wenn die Spannung der besagten Stromquelle einen ersten Schwellenwert übersteigt.

2. Leistungssteuerung nach Anspruch 1, wobei die besagte Steuerung (18) die besagte Leistungsausgangsschaltung (14) von der besagten Last trennt, wenn die Spannung der besagten Stromquelle unter einen zweiten Schwellenwert abfällt, was einen teilweisen oder völligen Ausfallzustand anzeigt.

3. Leistungssteuerungsvorrichtung nach Anspruch 2, wobei die besagte Steuerung (18) die besagte Leistungsausgangsschaltung (14) automatisch wieder an die besagte Last anschaltet, wenn die Spannung der besagten Stromquelle zu einem Wert über dem besagten zweiten Schwellenwert zurückkehrt, wobei die besagte Steuerung (18) die besagte Leistungsausgangsschaltung (14) so konditioniert, daß sie nach der Wiederanschaltung an die besagte Last Ausgangsleistung in allmählich größer werdenden Schritten an die besagte Last abgibt.

4. Leistungssteuerungsvorrichtung nach Anspruch 3, wobei die besagte Steuerung (18) weiterhin ein Verzögerungsmittel zur Verzögerung der Wiederanschaltung der Leistungsausgangsschaltung (14) an die besagte Last, wenn die Spannung der besagten Stromquelle zu einem Wert über dem besagten zweiten Schwellenwert zurückkehrt, enthält.

5. Leistungssteuerungsvorrichtung nach Anspruch 4, wobei das besagte Verzögerungsmittel eine Zeitschaltung enthält, wobei die besagte Zeitschaltung auf einen vorbestimmten Zeitgrenzwert eingestellt wird, wobei die besagte Leistungsausgangsschaltung (14) wieder an die besagte Last angeschaltet wird, wenn der besagte Zeitgrenzwert abläuft.

6. Leistungssteuerungsvorrichtung nach Anspruch 5, wobei die besagte Steuerung weiterhin einen Zufallszahlengenerator zur Erzeugung des besagten Zeitgrenzwertes enthält.

7. Leistungssteuerungsvorrichtung nach einem der vorangehenden Ansprüche, die weiterhin einen Echtzeittakt und einen Zähler zum Zählen der Anzahl von Perioden einer Wechselstrom-Eingangsquelle für die besagte Leistungssteuerungsvorrichtung (10), so daß die besagte Steuerung (18) nach einer im voraus eingestellten Anzahl von Wechselstromperioden den besagten Echtzeittakt zwingend auf eine im voraus eingestellte Zeit zurücksetzt.

8. Leistungssteuerungsvorrichtung nach einem der vorangehenden Ansprüche, wobei die besagte Ausgangsleistung in diskreten Schritten geändert wird.

9. Leistungssteuerungsvorrichtung nach einem der vorangehenden Ansprüche, die weiterhin Speicher (20) zum Speichern eines gewünschten Ausgangsleistungsniveaus oder Temperaturniveaus oder von beidem für jede einzelne Zeitspanne einer Mehrzahl von Zeitspannen umfaßt.

10. Leistungssteuerungsvorrichtung nach Anspruch 9, wobei die besagte Steuerung (18) durch das Temperaturniveau der Last oder das Temperaturniveau ihrer Umgebung betätigt wird.

11. Leistungssteuerungsvorrichtung nach Anspruch 9, weiterhin mit einem Übersteuerungsmittel zur Übersteuerung des gewünschten Leistungsausgangsniveaus und/oder Temperaturniveaus während einer beliebigen gegebenen Zeitspanne.

**12.** Leistungssteuerungsvorrichtung nach Anspruch 9, wobei die Leistungssteuerungsvorrichtung (10) fernprogrammierbar ist.

**13.** Leistungssteuerungsvorrichtung nach Anspruch 12, wobei der besagte Speicher (20) durch eine abgesetzte Steuerung programmierbar ist, die über die Stromversorgungsleitungen kommuniziert, die Eingangsleistung an die Leistungseingangsschaltung (12) abgeben.

**14.** Leistungssteuerungsvorrichtung nach Anspruch 9, wobei der besagte Speicher (20) außerdem Leistungsniveauausgangsdaten aufzeichnet, wobei ein über eine im voraus eingestellte Zeitspanne gebildeter Mittelwert solcher Daten verwendet wird, um variable gespeicherte Grenzwerte in dem Speicher zu ändern.

**15.** Leistungssteuerungsvorrichtung nach Anspruch 9, wobei der besagte Speicher (20) außerdem die Umgebungstemperatur aufzeichnet, wobei ein über eine im voraus eingestellte Zeitspanne gebildeter Mittelwert solcher Daten verwendet wird, um variable gespeicherte Grenzwerte in dem Speicher zu ändern.

**16.** Leistungssteuerungsvorrichtung nach Anspruch 9, wobei der besagte Speicher (20) ein gewünschtes Ausgangsleistungsniveau oder Temperaturniveau oder beides über eine Zeitspanne von Tagen, Wochen, Monaten oder Jahren hinweg aufzeichnet.

**17.** Leistungssteuerungsvorrichtung nach einem der vorangehenden Ansprüche, mit einer Mehrzahl von Leistungsausgangsschaltungen (14) zum Abgeben von Ausgangsleistung an mehrere Lasten.

**18.** Leistungssteuerungsvorrichtung nach einem der vorangehenden Ansprüche, weiterhin mit einem Motor, der an ein Bypassventil angekoppelt ist, um als Reaktion auf Temperatursensoren, die eine Kaltwasserversorgung und eine Heißwasserausgabe überwachen, eine Kaltwasserversorgung um einen Wärmetauscher herum umzulenken.

**19.** Leistungssteuerungsvorrichtung nach einem der vorangehenden Ansprüche, weiterhin mit einem Motor, der an ein Mischventil angekoppelt ist, um eine Kaltwasserversorgung mit einer Heißwasserausgabe zu mischen, um die Temperatur von an einen Benutzer abgegebenen heißen Wasser zu regeln.

**20.** Leistungssteuerungsvorrichtung nach einem der vorangehenden Ansprüche, weiterhin mit einem Motor, der an ein Ventil angekoppelt ist, um einen Flüssigkeitsstrom durch ein Rohr zu steuern.

**Revendications**

**1.** Un dispositif de commande de puissance (10) comprenant:

un circuit d'entrée de puissance (12) pour recevoir la puissance d'entrée à partir d'une source de puissance électrique;
un circuit de sortie de puissance (14) pour fournir une puissance de sortie à une charge;
un détecteur de tension (22, 24) pour mesurer la tension de ladite source de puissance électrique;
un contrôleur (18) sensible audit détecteur de tension, caractérisé en ce que ledit contrôleur (18) varie la puissance de sortie fournie à ladite charge par ledit circuit de sortie de puissance en réponse à des variations détectées de la tension de ladite source de puissance électrique au-delà d'une valeur préréglée, et en ce que, ledit contrôleur (18) augmente la puissance de sortie fournie à ladite charge par ledit circuit de sortie de puissance (14) lorsque la tension de ladite source de puissance électrique augmente au-delà d'une première valeur de seuil.

**2.** Un dispositif de commande de puissance selon la revendication 1, dans lequel ledit contrôleur (18) débranche ledit circuit de sortie de puissance (14) de ladite charge dans le cas où la tension de ladite sortie de puissance tombe en dessous d'une deuxième valeur de seuil indicatif d'une coupe du secteur brève ou prolongée.

**3.** Un dispositif de commande de puissance selon la revendication 2, dans lequel ledit contrôleur (18) rebranche automatiquement ledit circuit de sortie de puissance (14) sur ladite charge quand la tension de ladite source de puissance électrique revient au-dessus de ladite deuxième valeur de seuil, ledit contrôleur (18) imposant des conditions audit circuit de sortie de puissance (14) afin de fournir la puissance de sortie à ladite charge selon des ingréments en augmentation progressive lors du rebranchement de ladite charge.

**4.** Un dispositif de commande de puissance selon la revendication 3, dans lequel ledit contrôleur (18) comprend en outre des moyens de retard pour retarder le rebranchement dudit circuit de sortie de puissance (14) sur ladite charge dans le cas où la tension de ladite source de puissance électrique repasse de nouveau au-dessus de ladite deuxième valeur de seuil.

5. Un dispositif de commande de puissance selon la revendication 4, dans lequel ledit moyen de retard comprend un temporisateur, ledit temporisateur étant réglé à une valeur de temporisation prédéterminée, ledit circuit de sortie de puissance (14) étant rebranché sur ladite charge à l'écoulement de ladite valeur de temporisation.

6. Un dispositif de commande de puissance selon la revendication 5, dans lequel ledit contrôle comprend en outre un générateur de nombre aléatoire pour générer ladite valeur de temporisation.

7. Un dispositif de commande de puissance selon l'une quelconque des revendications précédentes, comprenant en outre une horloge temps réel et un compteur pour compter le nombre de cycles d'une source d'alimentation en courant alternatif fournie en entrée audit dispositif de commande de puissance (10) de sorte que, après un nombre préréglé de cycles de courant alternatif, ledit contrôleur (18) force la remise à une heure préréglée de ladite horloge temps réel.

8. Un dispositif de commande de puissance selon l'une quelconque des revendications précédentes, dans lequel on varie ladite puissance de sortie selon des paliers discrèts.

9. Un dispositif de commande de puissance selon l'une quelconque des revendications précédentes, comprenant en outre une mémoire (20) pour le stockage d'un niveau de puissance de sortie souhaité ou un niveau de température ou les deux, pour chacune d'une pluralité de période de temps.

10. Un dispositif de commande de puissance selon la revendication 9, dans lequel ledit contrôleur (18) est activé par le niveau de température de ladite charge ou le niveau de température de son environnement.

11. Un dispositif de commande de puissance selon la revendication 9, comprenant en outre des moyens de priorité permettant de prendre la priorité sur ledit niveau de puissance de sortie et/ou ledit niveau de température souhaités pendant une période de temps prédéterminée donnée quelconque.

12. Un dispositif de commande de puissance selon la revendication 9, dans lequel ledit dispositif de commande de puissance (10) est susceptible d'être programmé à distance.

13. Un dispositif de commande de puissance selon la revendication 12, dans lequel ladite mémoire (20) est programmable au moyen d'un contrôle éloigné, en communication à travers les ligne d'alimentation de puissance fournissant la puissance d'entrée pour ledit circuit d'entrée de puissance (12).

14. Un dispositif de commande de puissance selon la revendication 9, dans lequel ladite mémoire (20) enregistre également des données concernant le niveau de puissance de sortie, une moyenne desdites données sur une période préréglée étant exploitée afin de changer des limites variables stockées dans ladite mémoire.

15. Un dispositif de commande de puissance selon la revendication 9, dans lequel ladite mémoire (20) enregistre également la température de l'environnement, une valeur moyenne de telles données sur une période préréglée étant utilisée pour changer des limites variables stockées dans la mémoire.

16. Un dispositif de commande de puissance selon la revendication 9, dans lequel ladite mémoire (20) enregistre un niveau de puissance de sortie ou un niveau de température souhaité(s) ou les deux, sur une période de jours, de semaines, de mois ou d'années.

17. Un dispositif de commande de puissance selon l'une quelconque des revendications précédentes, comprenant une pluralité de circuits de sortie de puissance (14) pour fournir une puissance de sortie à des charges multiples.

18. Un dispositif de commande de puissance selon l'une quelconque des revendications précédentes. comprenant en outre un moteur couplé à une valve de dérivation pour effectuer la dérivation d'une alimentation en eau froide autour d'un échangeur de chaleur en réponse à des capteurs de température qui surveillant une alimentation en eau froide, et une sortie d'eau chaude.

19. Un dispositif de commande de puissance selon l'une quelconque des revendications précédentes, comprenant en outre un moteur couplé à une valve mélangeuse pour mélanger une alimentation en eau froide à une sortie d'eau chaude pour régler la température de l'eau chaude fournie à un utilisateur.

20. Un dispositif de commande de puissance selon l'une quelconque des revendications précédentes, comprenant en outre un moteur couplé à une valve pour régler le débit d'un fluide à travers une conduite.

FIG 1

FIG 2

FIG 3

FIG 4

EP 0 647 365 B1

EP 0 647 365 B1

78

VCC

2322-640-10472-PHILIPS — TPSEN5 — T5
2322-640 — TPSEN4 — T4
2322-640 — TPSEN3 — T3
2322-640 — TPSEN2 — T2
2322-640 — TPSEN1 — T1

1.5K

1N4878

0.1UF

10uf 35v

4.99K 0.5% 0.1UF
4.99K 0.5% 0.1UF
4.99K 0.5% 0.1UF
4.99K 0.5% 0.1UF
4.99K 0.5% 0.1UF

A VCC

30

2
3
A
1
B

TL082 — AREF+

76

220K — 10K — 1 — 2 — STP6
74HC14
A

MOTOR STEPPER
1N5231B
220K

VZ 12V

VZ

0.1UF

1R

1R

STP3
STP4
STP1 — DIR
STP2 — DIR

50K
390PF

2916B

220K — 10K — 3 — 4 — STP5
74HC14
B
220K

1N5131B

VCC
1uF
390PR 50K

FIG 5

FIG 6

FIG 7

EP 0 647 365 B1

FIG 8